# EUROPÄISCHE PATENTSCHRIFT

(11) **EP 0 709 950 B1**
(45) Veröffentlichungstag und Bekanntmachung des Hinweises auf die Patenterteilung: **17.06.1998**
(21) Anmeldenummer: 95116770.9
(22) Anmeldetag: 25.10.1995
(51) Int. Cl.: H02M 5/293, H01H 9/54, H01H 47/32

(54) **Zweidraht-Laststeuereinrichtung**
Two-wire load control device
Dispositif de contrôle de charge à deux fils

(30) Priorität: 31.10.1994 DE 4438519
(43) Veröffentlichungstag der Anmeldung: 01.05.1996
(73) Patentinhaber: FLASH, 67700 Saverne (FR)
(72) Erfinder: Dubot, Guy, F-67700 Otterswiller (FR); Gerber, Patrick, F-57370 Phalsbourg (FR)

(56) Entgegenhaltungen:
- WO-A-96/11488
- DE-U- 8 914 344
- US-A- 4 754 213

## Beschreibung

Die Erfindung betrifft eine Steuereinrichtung gemäß dem Oberbegriff des Anspruches 1.

Eine solche Steuereinrichtung ist aus dem DE-GM 89 14 344 bekannt. Sie weist den Vorteil auf, mit nur zwei Anschlußdrähten direkt am Last-Netz betrieben werden zu können. Die transformatorenlose Gewinnung der von der Netzspannung abweichenden Betriebsspannung für die Laststeuerung beruht dabei im wesentlichen darauf, bei geöffnetem Lastschalter die Netzspannung zum Speisen eines Speichers gleichzurichten, aus dem dann die eigentliche Steuerschaltung für die umweltabhängige Betätigung des Lastschalters gespeist wird. Dabei wird der Speicher über zwei parallele Versorgungsstrecken mit hochohmigem bzw. niederohmigem Widerstand nachgeladen. Wenn die Last eingeschaltet werden soll, dann wird zunächst der Speicher-Ladekreis mit kleiner Lade zeitkonstante kurz eingeschaltet und dafür die Lasteinschaltung entsprechend verzögert, bis der Speicher nachgeladen ist, wobei bereits ein kapazitiver Ladestrom über die Last fließt. Dagegen wird der Speicher bei ausgeschalteter Last über den hochohmigen Lade-Strompfad gepuffert.

Obwohl dieses Prinzip, die Niederspannungs-Versorgung für den Betrieb der umweltabhängigen Laststeuerung transformatorenlos unmittelbar aus der Netzspannung des Lastkreises zu gewinnen, sich an sich bewährt hat, weist die vorbekannte Einrichtung doch noch das für den praktischen Einsatz nachteilige Verhalten auf, eine in manchen Fällen störende Verzögerung der Lasteinschaltung hinnehmen zu müssen, zumal wenn die Netzspannung nicht wesentlich höher als die Betriebsspannung für die Last-Steuerungsschaltung ist; und bei langen Lastbetriebszeitspannen kann die Speicherspannung kritisch absinken. Wenn im Lastkreis ein leistungsarmer Verbraucher (bzw. ein leistungsarmes Schütz für die Verbrauchersteuerung) betrieben wird, kann während an sich abgeschalteten Lastkreises schon der kleine über die Last fließende kapazitive Puffer-Ladestrom zu unerwünschten Auswirkungen führen.

In Erkenntnis dieser Gegebenheiten liegt deshalb der Erfindung die technische Problematik zugrunde, die vorbekannte Zweidraht-Laststeuereinrichtung unter Beibehaltung des an sich bewährten Versorgungsbetriebes dahingehend weiterzubilden, daß ein störungsfreier Betrieb auch leistungsarmer Verbraucher, und das selbst über einen sehr weiten Netzspannungsbereich, sichergestellt ist.

Diese Aufgabe wird erfindungsgemäß nach dem Hauptanspruch im wesentlichen dadurch gelöst, daß nun keine verzögerte Zuschaltung der Last mehr erfolgt, sondern bei zugeschalteter Last ein kurzzeitiger Spannungsabfall hervorgerufen und dadurch die am Speicher geringfügig abgesunkene Spannung über den niederohmigen Lade-Strompfad rasch wieder aufgebaut wird. Dafür muß der Lastkreis nicht unterbrochen werden; stattdessen wird aus dem Ladekreis für den Betriebsspannungsspeicher nun vorübergehend (periodisch) eine kleine Gegenspannung in den Lastkreis eingekoppelt, die den Laststrom geringfügig vermindert.

Die erfindungsgemäße Einrichtung zeichnet sich dem Stande der Technik gegenüber vor allem auch dadurch aus, daß sie, ohne Modifikation, unmittelbar in beliebigen Gleich- und Wechselstromspannungsnetzen zwischen etwa 12 V und 250 V einsetzbar ist.

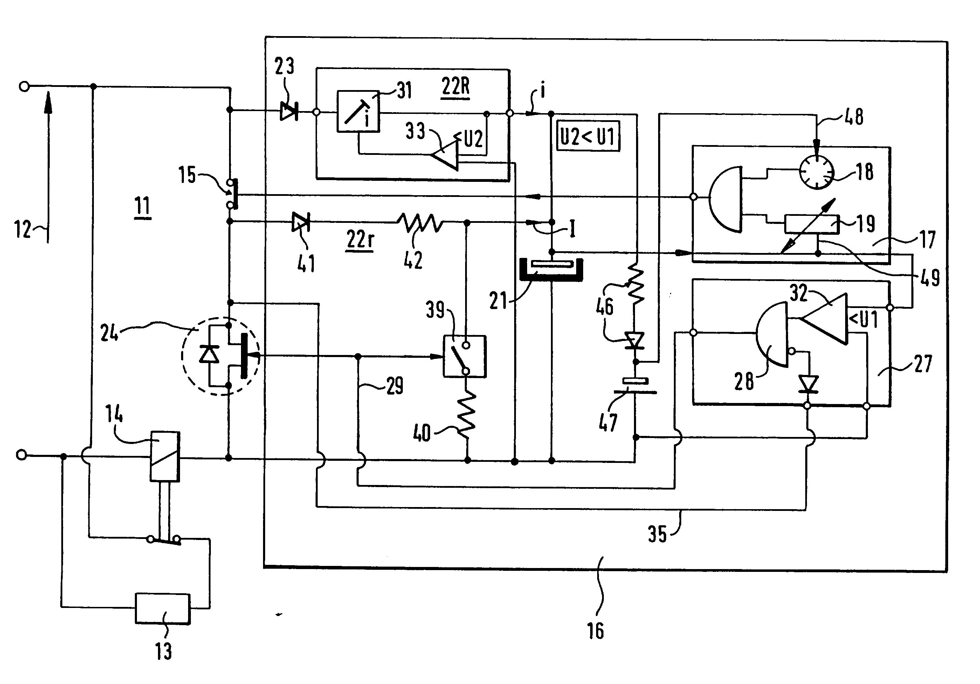

Zusätzliche Alternativen und Weiterbildungen sowie weitere Merkmale und Vorteile der Erfindung ergeben sich aus den weiteren Ansprüchen und, auch unter Berücksichtigung der Darlegungen in der abschließenden Zusammenfassung, aus nachstehender Beschreibung eines in der Zeichnung unter Beschränkung auf das Wesentliche als Blockschaltbild skizzierten schaltungsmäßigen Ausführungsbeispiels zur erfindungsgemäßen Lösung. Die einzige Figur der Zeichnung zeigt als Laststeuereinrichtung einen Uhrenthermostaten.

Ein Lastkreis 11 wird mit einer Netzspannung 12 gespeist, bei der es sich beliebig um eine Klein-, Mittel- oder Hochspannung und um Gleich- oder Wechselspannung handeln kann. Eine Last 13 liegt (unmittelbar, oder wie dargestellt) über ein Schütz 14 in Serie mit einem Lastschalter 15 im Lastkreis 11. Der Lastschalter 15, etwa ein Relaiskontakt, wird aus einer Laststeuereinrichtung 16 nach Maßgabe des Betriebszustandes ihrer Steuerung 17 geschaltet, die etwa eine Schaltuhr 18 enthält und mit einer Betriebsspannung 48 in der Größenordnung von 1 V bis 1,4 V arbeitet. Diese Betriebsspannung 48 wird von einer einzelligen, nachladbaren Batterie 47 geliefert, die über eine in Serie damit liegende Widerstands-Dioden-Begrenzungsschaltung 46 aus einem Speicher 21 großer Kapazität gepuffert ist. Der liegt über wenigstens eine zweier Ladeschaltungen 22 an der Netzspannung 12, wenn der Lastschalter 15 geschlossen ist und ein damit in Serie liegender Abschwächer 24 angesteuert ist, um den Speicher 21 auf eine Spannung 49 nachzuladen, die im Mittel bei 4 V (jedenfalls erheblich über der Betriebsspannung 48) liegt. Diese dient zum Puffern der Batterie 47, der Speisung eines Mikroprozessors und eines Thermostaten 19 sowie der weiteren elektronischen Schaltungen.

Wenn die Steuerung 17 (entgegen der in der Zeichnung dargestellten Schaltstellung) den Lastschalter 15 geöffnet hat, dann liegt praktisch die gesamte Netzspannung 12 über einen Gleichrichter 23 und eine hochohmige Ladeschaltung 22R am Speicher 21 an. Um diese Pufferung des Speichers 21 mit möglichst kleinem Strom i unabhängig von der Größe der Netzspannung 12 sicherzustellen, wird dieser zweckmäßigerweise nicht einfach durch einen großen Ladevorwiderstand begrenzt, sondern durch einen Stromregler 31 in der Lade-Schaltung 22R. Der begrenzt den kleinen Pufferstrom i zuverlässig auf einen für langfristiges Nachladen des Speichers 21 und für den kapazitiven Stromfluß in den Lastkreis 11 unkritischen Wert, beispielsweise in der Größenordnung von maximal 400 Mikroampère. Als preisgünstiger Stromregler 31 kann ein MOS-Feldeffekttransistor mit entsprechend eingestellter GATE-Vorspannung Anwendung finden. Ein Komparator 33 mit Verstärker in der Rückführung stellt sicher, daß diese Kleinstrom-Regelung weitestgehend unabhängig von der Versorgung 12 arbeitet.

Wenn der Lastschalter 15 von der Steuerung 17 geschlossen wird, um die Last 13 (unmittelbar oder über das Schütz 14) an die Netzspannung 12 zu legen und damit in Betrieb zu setzen, dann tritt über der Schaltstrecke praktisch kein Spannungsabfall mehr auf, so daß der Speicher 21 nun nicht mehr über die hochohmige Schaltung 22R gepuffert wird. Wenn deshalb die Speicherspannung 49 unter einen kritischen Grenzwert 41 abgesunken ist, wird ein mit dem Lastschalter 15 masseseitig in Serie liegender Abschwächer 24 von einem Komparator 32 über eine Steuerleitung 29 angesteuert. Das ist bei negativem Laststrom über die negierte Potentialverbindung 35 zum Gatter 28 hinter dem Komparator 32 sichergestellt, wenn es sich beim Abschwächer 24 um einen MOS-Transistor mit geringer Restspannung handelt, der sich für negativen Strom zwar an sich wie eine Diode verhält, aber wie ein sehr kleiner Widerstand (von ca. 10 Milliohm), wenn dabei die Gate-Vorspannung auf ca. 5 V gehalten wird. Dadurch ist ein vergleichsweise sehr großer Laststromfluß im Lastkreis 11 zulässig geworden. Sobald bei einer Netzwechselspannung 12 die positive Halbwelle einsetzt, liegt diese auch an der weiteren, einer niederohmigen, Ladeschaltung 22r mit kleinem Ladevorwiderstand 42 an. Die liefert nun (parallel zum wieder einsetzenden aber dagegen vernachlässigbar kleinen Ladestrom i) einen starken Ladestrom I zum raschen Nachladen des Speichers 21. Die Amplitude der Netzspannung 12 braucht nicht wesentlich größer als die mittlere Speicherspannung 49 zu sein. Wegen Anstiegs der Speicherspannung 49 auf > U1 wird der Abschwächer 24 alsbald wieder wirkungslos, weil der Komparator 32 und damit das Gatter 28 zurückschalten. Während dieses Zyklus schwankt die Speicher-Spannung 49 nur um ca. 300 mV, sie bleibt also praktisch konstant.

Indem so der Speicher 21 nachgeladen wurde und deshalb der Abschwächer 24 im Lastkreis 11 wieder auf Durchgang geschaltet ist, wird über die Steuerleitung 29 nun eine Schaltstrecke 39 leitend gesteuert, um den Speicher 21 über eine Last 40 definiert zu entladen. Diese Entladestrecke 40 ist mit solcher Zeitkonstante ausgelegt, daß nach dem Aufladen des Speichers 21 (also nach Wieder-Einschalten des Abschwächers 24) der Komparator 32 in der nächsten negativen Netzspannungshalbwelle wieder anspricht und so schon genau beim nächsten positiv gerichteten Nulldurchgang der Netzspannung 12 ein erneutes Laden des Speichers 21 einsetzt. Dadurch wird erzwungen, daß während Betriebes der Last 13 der Ladestrom I periodisch mit Beginn der positiven Netzspannungs-Halbwelle kurzzeitig einsetzt; ein Verlagern in Richtung auf den Netzspannungsscheitelwert würde nämlich bei Netzspannungen weit über der Nenn-Speicherspannung 49 eine untragbar große Spannung und damit einen zu großen Stromfluß über den niederohmigen Ladekreis 22r erbringen. In der Praxis wird die Kapazität des Speichers 21 in Hinblick auf die Belastung durch die Batterie 47 und den Entladewiderstand 40 so ausgelegt, daß für das periodische Nachladen des Speichers 21 mit dem großen Ladestrom I der Lastkreis 11 bei geschlossenem Lastschalter 15 pro Netzspannungsperiode höchstens etwa eine Millisekunde lang über den Abschwächer 24 wirksam werden muß, um den Speicher 21 einige Millisekunden lang wieder nachzuladen. Ein Schütz 14 im Lastkreis 11 fällt dadurch noch nicht ab, (zumal es während der Wirkzeit des Abschwächers 24 über den Speicher 21 mit dem großen kapazitiven Ladestrom I beaufschlagt wird), und es treten keine nennenswerten Rückwirkungen auf das Netz auf, weil der extrem kurzzeitige Eingriff beim Nulldurchgang erfolgt.

Wenn während geöffneten Lastkreises 11 der Speicher 21 nur mit dem kleinen Strom i gepuffert wird, soll dagegen keine Entladung über die Strecke 40 stattfinden. Deshalb ist die Speicherspannung 49 durch die Einstellung des Komparators 33 auf U₂ < U₁ reguliert, so daß der Komparator 32 nicht während geöffneten Lastkreises 11 einschalten kann, sondern nur während Betriebes der Last 13.

Wenn diese Laststeuereinrichtung 16 am Gleichspannungs-Netz 12 betrieben wird, entfällt natürlich das Steuerkriterium des Nulldurchganges. Stattdessen wird dann der große Ladestrom I direkt freigegeben, sobald und solange der Komparator 32 anspricht.

## Patentansprüche

1. Zweidraht-Laststeuereinrichtung (16), insbesondere mit einer Steuerung (17) mit Schaltuhr (18) und/oder Thermostat (19), mit einem Speicher (21), der aus der Netzspannung (12) einerseits über die Last (14/13) im Lastkreis (11) und andererseits über zwei Gleichrichter-Ladeschaltungen (22R, 22r) nachladbar ist, von denen die eine (22R) bei offenem Lastschalter (15) einen kleinen Pufferstrom (i) und die andere (22r) bei geschlossenem Lastschalter (15) einen dagegen großen Ladestrom (I) liefert,
**dadurch gekennzeichnet,**
daß im Lastkreis (11) mit dem Lastschalter (15) ein Abschwächer (24) in Serie liegt, der bei Absinken der Speicherspannung (49) kurzzeitig anspricht, wenn der Lastschalter (15) geschlossen ist, wobei die mittlere Größe der Speicherspannung (49) für die Speisung elektronischer Schaltungen in dieser Laststeuerschaltung (16) ausgelegt ist.

2. Laststeuereinrichtung nach Anspruch 1,
**dadurch gekennzeichnet,**
daß aus dem Speicher (21) eine Batterie (47) gepuffert ist, von der eine unter der Speicherspannung (49) liegende Betriebsspannung (48) für Geräte der Steuerung (17) geliefert wird.

3. Laststeuereinrichtung nach Anspruch 1 oder 2,
**dadurch gekennzeichnet,**
daß der Abschwächer (24) aus einem Spannungs-Komparator (32) ansteuerbar ist, wenn die Speicherspannung (49) kritisch abgesunken ist.

4. Laststeuereinrichtung nach Anspruch 3,
**dadurch gekennzeichnet,**
daß der Abschwächer (24) jeweils kurzzeitig angesteuert wird, wenn nach Absinken der Speicherspannung (49) eine Netzwechselspannung (12) gerade in eine Halbwelle mit der Polarität des Ladestromes (I) eintritt.

5. Laststeuereinrichtung nach einem der vorangehenden Ansprüche,
**dadurch gekennzeichnet,**
daß der Speicher (21) während Betriebes der Last (14/13) von einer Entladestrecke (41) belastet wird, nachdem der Ladestrom (I) beendet ist.

6. Laststeuereinrichtung nach einem der vorangehenden Ansprüche,
**dadurch gekennzeichnet,**
daß der Abschwächer (24) eine MOSFET-Transistor-Schaltstrecke ist, die bei negativem Laststrom durch positive Gate-Vorspannung vorübergehend auf kleinen Durchlaßwiderstand geschaltet ist.

7. Laststeuereinrichtung nach einem der vorangehenden Ansprüche,
**dadurch gekennzeichnet,**
daß der Speicher (21) während Betriebes der Last (14/13) mit der Periodizität der Netzspannung (12) langsam entladen und rasch wieder aufgeladen wird.

8. Laststeuereinrichtung nach einem der vorangehenden Ansprüche,
**dadurch gekennzeichnet,**
daß in der Ladeschaltung (22R) ein Stromregler (31) zur spannungsunabhängigen Begrenzung des kleinen Pufferstromes (i) vorgesehen ist.

## Claims

1. Two-wire load-controlling device (16), in particular with a control (17) with switch clock (18) and/or thermostat (19), with an accumulator (21) which can be recharged from the mains voltage (12) on the one hand by way of the load (14/13) in the load circuit (11) and on the other hand by way of two rectifier charging circuits (22R, 22r), of which one (22R), when the on-load switch (15) is open, supplies a low buffer current (i) and the other (22r), when the on-load switch (15) is closed, supplies a relatively great charging current (I),
**characterized in that,**
in the load circuit (11), an attenuator (24) is in series with the on-load switch (15), this attenuator, when the stored voltage (49) drops, briefly responding when the on-load switch (15) is closed, the mean value of the stored voltage (49) being designed to supply electronic circuits in this load-controlling circuit (16).

2. Load-controlling device according to Claim 1,
**characterized in that,**
from the accumulator (21) a battery (47) is buffered, from which an operating voltage (48), which is less than the stored voltage (49), is supplied for apparatuses of the control (17).

3. Load-controlling device according to Claim 1 or 2,
**characterized in that,**
the attenuator (24) can be activated by a voltage comparator (32) when the stored voltage (49) has dropped critically.

4. Load-controlling device according to Claim 3,
**characterized in that,**
the attenuator (24) is briefly activated each time when, after the stored voltage (49) has dropped, a mains alternating voltage (12) just enters in a half-wave with the polarity of the charging current (I).

5. Load-controlling device according to one of the preceding claims,
**characterized in that,**
during operation of the load (14/13), the accumulator (21) is loaded by a discharge path (41) after the charging current (I) has ceased.

6. Load-controlling device according to one of the preceding claims,
**characterized in that,**
the attenuator (24) is a MOSFET transistor switching path which, with negative load current, is temporarily switched by positive gate bias voltage to low forward resistance.

7. Load-controlling device according to one of the preceding claims,
**characterized in that,**
during operation of the load (14/13), the accumulator (21), with the periodicity of the mains voltage (12), is slowly discharged and quickly recharged.

8. Load-controlling device according to one of the preceding claims,
**characterized in that,**
a current regulator (31) for the voltage-independent limitation of the low buffer current (i) is provided in the charging circuit (22R).

## Revendications

1. Dispositif de régulation de charge à deux fils (16), en particulier équipé d'une commande (17) comportant une minuterie de contact (18) et/ou un thermostat (19), avec un accumulateur (21) pouvant être rechargé à partir de la tension réseau (12) d'une part, par l'intermédiaire de la charge (14/13), dans le circuit de charge (11) et, d'autre part, par l'intermédiaire de deux circuits de charge redresseurs (22R, 22r), circuits dont l'un (22R) fournit, lorsque l'interrupteur de charge (15) est ouvert, un petit courant tampon (i) et l'autre (21r) fournit, lorsque l'interrupteur de charge (15) est fermé, un courant de charge (I) qui par contre est de valeur élevée,
caractérisé en ce que
un atténuateur (24) est monté en série avec l'interrupteur de charge (15) dans le circuit de charge (11) et réagit en peu de temps en cas de diminution de la tension d'accumulateur (49), lorsque l'interrupteur de charge (15) est fermé, la valeur moyenne de la tension d'accumulateur (49) destinée à l'alimentation des circuits électroniques étant formée dans ce circuit de régulation de charge (16).

2. Dispositif de régulation de charge selon la revendication 1, caractérisé en ce qu'à partir de l'accumulateur (21) est montée en tampon une batterie (47) d'où est fournie une tension de fonctionnement (48), inférieure à la tension d'accumulateur (49) et destinée à des appareils de la régulation (17).

3. Dispositif de régulation de charge selon la revendication 1 ou 2, caractérisé en ce que l'atténuateur (24) est commandable à partir d'un comparateur de tension (32), lorsque la tension d'accumulateur (49) est descendue de façon critique.

4. Dispositif de régulation de charge selon la revendication 3, caractérisé en ce que l'atténuateur (24) est chaque fois commandé sur une brève durée lorsque, après abaissement de la tension d'accumulateur (49), une tension alternative de réseau (12) pénètre justement dans une demi-onde ayant la polarité du courant de charge (I).

5. Dispositif de régulation de charge selon l'une des revendications précédentes, caractérisé en ce que l'accumulateur (21) est chargé pendant le fonctionnement de la charge (14/13) par un tronçon de décharge (41), après que le courant de charge (I) ait disparu.

6. Dispositif de régulation de charge selon l'une des revendications précédentes, caractérisé en ce que l'atténuateur (24) est un élément de circuit à transistor MOSFET, qui, en cas de charge négative, est branché sur une petite résistance en courant continu à l'état passant transitoirement, par une pré-tension de grille positive.

7. Dispositif de régulation de charge selon l'une des revendications précédentes, caractérisé en ce que l'accumulateur (21) est déchargé lentement et rechargé rapidement pendant le fonctionnement de la charge (14/13), à la périodicité de la tension de réseau (12).

8. Dispositif de régulation de charge selon l'une des revendications précédentes, caractérisé en ce que, dans le circuit de charge (22R), est prévu un régulateur d'intensité (31) destiné à limiter le petit courant tampon (i) en fonction de la tension.
